# EUROPEAN PATENT APPLICATION

(11) **EP 1 496 068 A1**
(43) Date of publication of application: **12.01.2005**
(21) Application number: 03102058.9
(22) Date of filing: 09.07.2003
(51) Int. Cl.: C08F 10/00, C08F 10/02, C08L 23/08

(54) **Process to produce bimodal polyolefins with metallocene catalysts using two reaction zones.**

(71) Applicant: TOTAL PETROCHEMICALS RESEARCH FELUY, 7181 Seneffe (Feluy) (BE)
(72) Inventor: Razavi, Abbas, B-7000, Mons (BE)
(74) Representative: Leyder, Francis

(57) **Abstract**

This invention discloses a process for the preparation of polyolefins having a bi - or multimodal molecular weight distribution comprising the steps of:
(i) contacting olefin monomer and a first co -reactant with a catalyst system in a first continuously stirred reactor under first polymerisation conditions to produce a product comprising a first polyolefin having a first molecular weight distribution; and
(ii) contacting olefin monomer and a second co -reactant with a catalyst system in a second continuously stirred reactor under second polymerisation conditions to produce a product comprising a second polyolefin having a second molecular weight distribution that is different from the first molecular weight distribution;
wherein the first and second continuously stirred reactors are connected in series, and the first and second polyolefins are mixed together, and wherein one of the co-reactants is hydrogen and the other is a comonomer, and wherein each catalyst system comprises (a) a metallocene or post -metallocene catalyst component; and (b) an activating agent which activates the catalyst component.

## Description

The present invention relates to a process for the preparation of polyolefins, especially polyethylenes, having a multimodal molecular weight distribution (MWD), more particularly a bimodal molecular weight distribution.

Polyolefins such as polyethylenes which have high molecular weight generally have improved mechanical properties over their lower molecular weight counterparts. However, high molecular weight polyolefins can be difficult to process and can be costly to produce. Polyolefins having a bimodal molecular weight distribution are desirable because they can combine the advantageous mechanical properties of the high molecular weight fraction with the improved processing properties of the low molecular weight fraction.

Specifically, polyethylene with enhanced toughness, strength and environmental stress cracking resistance (ESCR) is important. These enhanced properties are more readily attainable with high molecular weight polyethylene. However, as the molecular weight of the polymer increases, the processability of the resin decreases. By providing a polymer with a broad or bimodal MWD, the desired properties that are characteristic of high molecular weigh resin are retained while processability, particularly extrudibility, is improved.

There are several methods for the production of bimodal or broad molecular weight distribution resins: melt blending, reactor in series configuration, or single reactor wi th dual site catalysts. Melt blending suffers from the disadvantages brought on by the requirement of complete homogenisation and high cost. Use of a dual catalyst for the production of a bimodal resin in a single reactor is also known.

Chromium catalysts for use in polyolefin production tend to broaden the molecular weight distribution and can in some cases produce bimodal molecular weight distribution but usually the low molecular part of these resins contains a substantial amount of the comonomer. Whilst a broadened molecular weight distribution provides acceptable processing properties, a bimodal molecular weight distribution can provide excellent properties. In some cases it is even possible to regulate the amount of high and low molecular weight fraction and thereby regulate the mechanical properties. However, it is difficult to make bimodal polyethylene, for example, with a single catalyst because two separate sets of reaction conditions are needed.

Ziegler-Natta catalysts are known to be capable of producing bimodal polyethylene using two reactors in series. Typically, in a first reactor, a low molecular weight homopolymer is formed by reaction between hydrogen and ethylene in the presence of the Zeigler-Natta catalyst. It is essential that excess hydrogen be used in this process and, as a result, it is necessary to remove all the hydrogen from the first reactor before the products are passed to the second reactor. In the second reactor, a copolymer of ethylene and hexene is made so as to pr oduce a high molecular weight polyethylene.

Metallocene catalysts are also known in the production of polyolefins. For example, EP-A-0619325 describes a process for preparing polyolefins such as polyethylenes having a multimodal or at least bimodal molecular weight distributions. In this process, a catalyst system which includes at least two metallocenes is employed in a single reactor. The metallocenes used are, for example, a bis(cyclopentadienyl) zirconium dichloride and an ethylene-bis(indenyl) zirconium dichloride. By using the two different metallocene catalysts in the same reactor, a molecular weight distribution is obtained which is at least bimodal.

EP-A-0881237 describes a process to produce bimodal polyolefins with metallocene catalysts using two reaction zones. Each reaction zone contains a different catalyst system wherein each catalyst system comprises a metallocene catalyst component comprising a bis tetrahydroindenyl compound. The possibility of the first and second reaction zones bein g interconnected loop reactors or an interconnected loop reactor and continuously stirred reactor are disclosed.

The present invention aims to provide a new process for the preparation of polyolefins having a bi - or multimodal molecular weight distribution.

As such, the present invention provides a process for the preparation of polyolefins having a bi - or multimodal molecular weight distribution comprising the steps of:
(i) contacting olefin monomer and a first co -reactant with a catalyst system in a first continuously stirred reactor under first polymerisation conditions to produce a product comprising a first polyolefin having a first molecular weight distribution; and
(ii) contacting olefin monomer and a second co -reactant with a catalyst system in a second continuously stirred reactor under second polymerisation conditions to produce a product comprising a second polyolefin having a second molecular weight distribution that is different from the first molecular weight distribution;
wherein the first and second continuously stirred reactors are connected in series, and the first and second polyolefins are mixed together, and wherein one of the co-reactants is hydrogen and the other is a comonomer, and wherein each catalyst system comprises (a) a metallocene or post-metallocene catalyst component and (b) an activating agent which activates the catalyst component.

It will be appreciated from the above that, in each reactor, a single site catalyst system is employed.

Because the metallocene catalyst c omponent is capable of operating at relatively low concentrations of at least the first co-reactant, the process can be performed under conditions whereby substantially all of the first co-reactant is consumed in the first reaction zone. This is especiall y so where the product of step (i) is contacted with the second co -reactant in step (ii). This makes the process more efficient and more economical to operate. The costly need to ensure that excess quantities of the first co-reactant are removed may be avoided.

It has been shown that the combination of low branching (ideally no branching) in the low molecular part of the resin and high concentration in the high molecular part significantly improves the resin properties with respect to Environmental Str ess Crack Resistance (ESCR) and impact strength.

With the present catalyst system, using two continuously stirred rectors that are interconnected in series has been found to provide for improved resin properties.

According to this invention, the continuously stirred reactors typically operate in liquid full conditions.

The metallocene or post-metallocene catalyst component according to the present process is not particularly limited. The catalyst component should be such that, when activated by the activating agent, it has a good hydrogen response so as to be able to act in the presence of hydrogen to produce a product comprising a polyolefin having a lower molecular weight distribution. Further, it should have good comonomer incorporation so as to be able to act in the presence of a comonomer to produce a product comprising a polyolefin having a higher molecular weight distribution. Catalyst components of this type will be well known to the skilled person. However, some preferred catalyst components are detailed below.

Catalysts having a 'good hydrogen response' and/or 'good comonomer incorporation' can be identified by measuring the melt index and molecular weight of polyolefin products obtained using the candidate catalyst.

A first class of preferred catalyst components are those components comprising a bis tetrahydroindenyl compound of the general formula:

(IndH₄)₂R"MQ₂

where each Ind is the same or different and is indenyl or substituted indenyl; R" is a bridge which comprises a C₁-C₄ alkylene radical, a dialkyl germanium or silicon or siloxane, or an alkyl phosphine or amine radical, which bridge is substituted or unsubstituted; M is a Group IV metal or vanadium; and each Q independently is a hydrocarbyl having 1 to 20 carbon atoms or halogen.

Each bis tetrahydroindenyl compound may be substituted in the same way or differently from one another at one or more positions in the cyclopentadienyl ring, the cyclohexenyl ring and the ethylene bridge. Each substituent group may be independently chosen from those of formula XRᵥ in which X is chosen from Group IVA, oxygen and nitrogen and each R is the same of different and chosen from hydrogen or hydrocarbyl of from 1 to 20 carbon atoms and v+1 is the valence of X. X is preferably C. If the cyclopentadienyl ring is substituted, its substituent groups must not be so bulky as to affect coordination of the olefin monomer to the metal M. Substituents on the cyclopentadienyl ring of formula XRᵥ preferably have R as hydrogen or CH₃. More preferably, at least one and most preferably both cyclopentadienyl rings are unsubstituted.

In a particularly preferred embodiment, both indenyls are unsubstituted.

R" is preferably an ethylene bridge which is substituted or unsubstituted.

The metal M is preferably, zirconium, hafnium or titanium, most preferably zirconium.

Each Q is the same or different and may be a hydrocarbyl or hydrocarboxy radical having 1-20 carbon atoms or a halogen. Suitable hydrocarbyls include aryl, alkyl, alkenyl, alkylaryl or aryl alkyl. Each Q is preferably halogen.

Ethylene bis (4,5,6,7-tetrahydro-1-indenyl) zirconium dichloride is a particularly preferred bis tetrahydroindenyl compound of the present invention.

Catalyst components according to the first class of preferred catalyst components can be prepared by any known method. A preferred preparation method is described in J. Org. Chem. 288, 63-67 (1985).

A second class of preferred catalyst components are those having heteroatom-containing ligands, specifically those compr ising general formula I:

(L)ₙM(Q)ₚ (I)

where M is selected from the group consisting of Ti, Zr, Sc, V, Cr, a rare earth metal, Fe, Co, Ni or Pd;
each Q independently is a hydrocarbon having 1 -20 carbon atoms or is a halogen:
p is the valence of M minus the sum of the coordination numbers of all L;
n is selected from 1, 2, or 3; and
L is a heteroatom-containing ligand. The heteroatom desirably is electron donating and is positioned so that it can coordinate to M. L may contain more than one hetero atom. Where L contains 2 or 3 heteroatoms that are capable of coordinating to M, typically L will be bidentate or tridentate, respectively.

Preferred Q groups include chlorine, bromine, iodine, and alkyl groups having 1 to 20 carbon atoms.

In one embodiment, preferably, n is 1 and L is a bidentate ligand selected from the group consisting of: 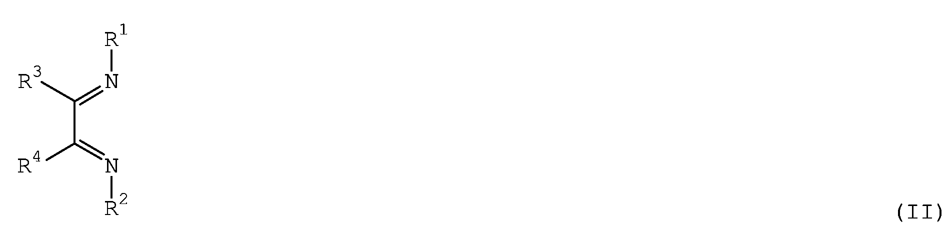 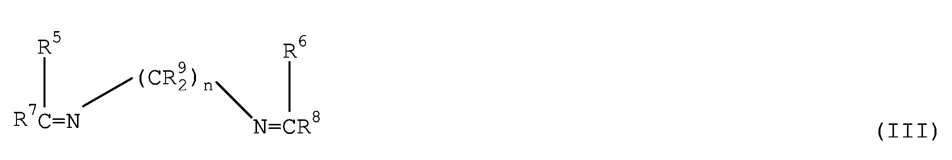 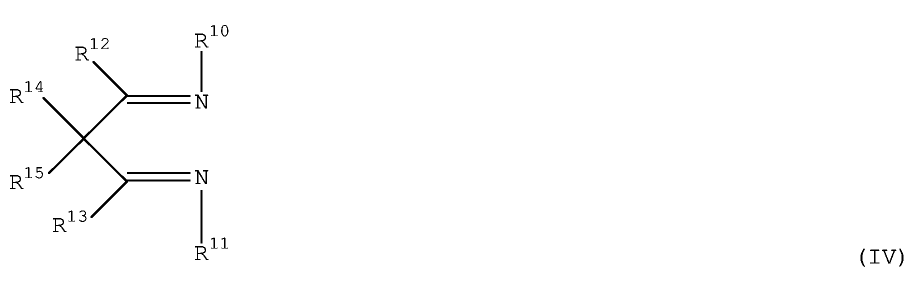 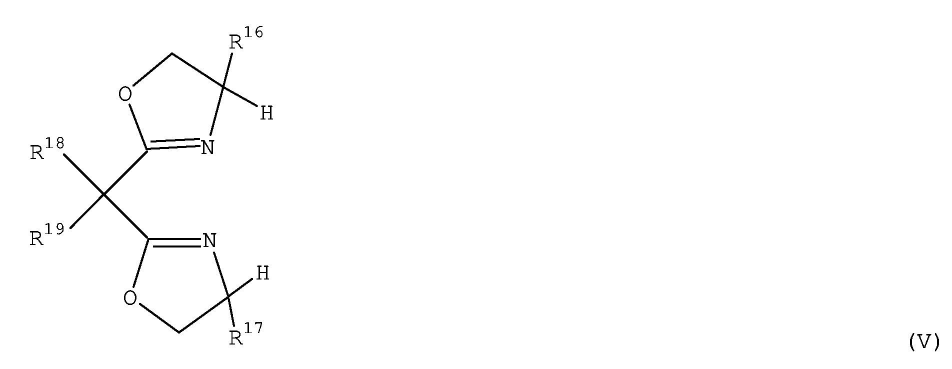 where n = 2 or 3; R¹,R²,R⁷,R⁸,R¹⁰,R¹¹,R¹²,R¹³,R¹⁶ and R¹⁷ each independently is hydrocarbyl or substituted hydrocarbyl, and R³,R⁴,R⁵,R⁶,R⁹,R¹⁴,R¹⁵,R¹⁸, and R¹⁹ each independently is hydrogen, hydrocarbyl or substituted hydrocarbyl; such that R³ and R⁴ in formula II taken together may form a ring, two R⁹ and/or R⁵ and R⁷ and/or R⁶ and R⁸ in formula III taken together may form a ring and/or R¹⁸ and R¹⁹ in formula V may form a ring.

Generally, R¹² and R¹⁰; R¹¹ and R¹³; or R¹⁴ and R¹⁵ in formula IV do not form a ring.

In the above formulae II, III, IV, and V, N in fact may be any electron donating heteroatom. Other suitable heteroatoms include P and O.

When L is selected from above formulae II, III, IV, and V, preferably M is Ni or Pd.

Catalyst components having formula I and their preparation are described in US 5,880,323 the contents of which are incorporated herein by reference.

The catalyst synthesis for catalyst components having formula I is easier than for metallocenes. Furthermore, the catalyst components are advantageous insofar as they allow single site conversion of polymers and allow polar comonomer incorporation during precipitation.

Without wishing to be bound by theory, it is proposed that these catalysts polymerise via a β-hydride elimination route. Further information on this proposed mechanism is given in Chemical Market Resources Inc., Feb 1996, Issue No. 1, pages 4 to 8.

A particularly preferred catalyst component of general formula I is shown below in Formula VI: 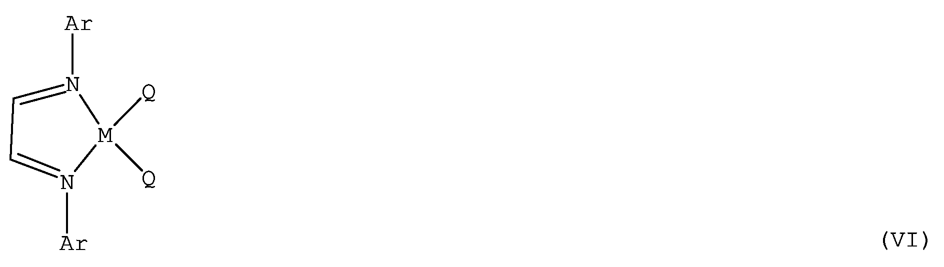 where M is Ni or Pd; each Q independently is as defined above in relation to general formula I and Ar comprises an aryl group. Preferably, Q is CH₃ or Br and Ar comprise a substituted phenyl group, such as 2,6-C₆H₃(i-Pr₂).

Within the second class of preferred catalyst components one may define a further embodiment where n is 1 and L is a tridentate ligand. Preferably M is iron or cobalt. A preferred L is a tridentate ligand of two 2,3-diisopropylaniline groups linked to a 2,6-substituted pyridine group. Such a catalyst comprises general formula VII below: 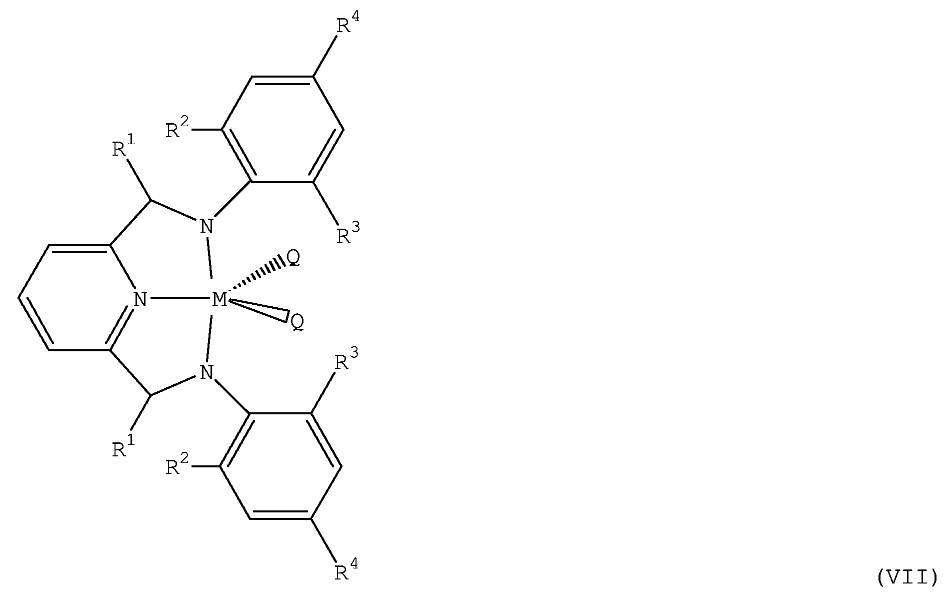 where each Q is as defined above; M is Fe or Co; and R¹,R²,R³ and R⁴ each independently is hydrogen, hydrocarbyl or substituted hydrocarbyl, preferably, H, Me or Prⁱ.

Preferably, both Q are Cl.

Preferred combinations of M and R¹ to R⁴ are:
1 M=Fe; R¹=Me; R²=R³=Prⁱ; R⁴=H
2 M=Fe; R¹=R²=R³=Me; R⁴=H
3 M=Fe; R¹=R²=R³=R⁴=Me
4 M=Fe; R¹=R²=R⁴=Me; R³=H
5 M=Fe; R¹=R⁴=H; R²=R³=Me
6 M=Co; R¹=Me; R²=R³=Prⁱ; R⁴=H

A further embodiment in the second class of preferred catalyst components has n=3 where each L is a monodentate ligand. Preferably, each L contains a phenyl group. Such catalyst components may comprise general formula VIII: 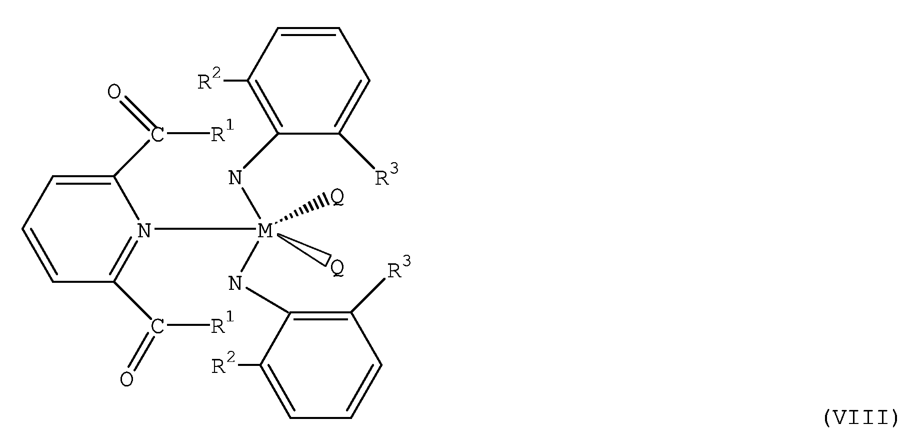 where each Q independently is as defined above; Me is Fe or Co; and R¹,R² and R³ each independently is hydrogen, hydrocarbyl or substituted hydrocarbyl. Preferably, both R¹ are Me and all R² and R³ are Prⁱ.

Preferably, each Q is chlorine.

The catalyst component in the first reactor may be the same or different to the catalyst component in the second reactor.

In one embodiment, a different single site catalyst is used in each reactor. In another embodiment, two different catalysts may be supported on a single support (to form a dual site catalyst) and this dual site catalyst may be used in both reactors.

The activating agent which activates the metallocene or post-metallocene catalyst component can be any activating agent known for this purpose such as an aluminium-containing activating agent or a boron-containing activating agent. The aluminium-containing activating agent may comprise an alumoxane, an alkyl aluminium and/or a Lewis acid.

The alumoxanes used in the process of the present invention are well known and preferably comprise oligomeric linear and/or cyclic alkyl alumoxanes represented by the formula: 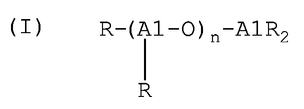 for oligomeric, linear alumoxanes and 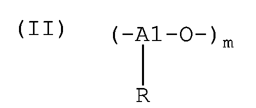 for oligomeric, cyclic alumoxane,
wherein n is 1-40, preferably 10-20, m is 3-40, preferably 3-20 and R is a C₁-C₈ alkyl group and preferably methyl.

Other preferred activating agents include hydroxy isobutylaluminium and metal aluminoxinates. These are particularly preferred for metallocenes as described in Main Group Chemistry, 1999, Vol. 3, pg 53-57; Polyhedron 18 (1999), 2211-2218; and Organometallics 2001, 20, 460-467.

Generally, in the preparation of alumoxanes from, for example, aluminium trimethyl and water, a mixture of linear and cyclic compounds is obtained.

Suitable boron-containing activating agents may comprise a triphenylcarbenium boronate such as tetr akis-pentafluorophenyl-borato-triphenylcarbenium as described in EP-A-0427696, or those of the general formula [L' -H] + [B Ar₁ Ar₂ X₃ X₄]- as described in EP-A-0277004 (page 6, line 30 to page 7, line 7).

Preferably, the same catalyst system is used in bo th steps (i) and (ii) of the process. The catalyst system may be employed in a solution polymerisation process, which is homogeneous, or a slurry process, which is heterogeneous. In a solution process, typical solvents include hydrocarbons with 4 to 7 ca rbon atoms such as heptane, toluene or cyclohexane. In a slurry process it is necessary to immobilise the catalyst system on an inert support, particularly a porous solid support such as talc, inorganic oxides and resinous support materials such as polyolefin. Preferably the support material is an inorganic oxide in its finally divided form.

Suitable inorganic oxide materials which are desirably employed in accordance with this invention include Group 2a, 3a, 4a or 4b metal oxides such as silica, alumina and mixtures thereof. Other inorganic oxides that may be employed either alone or in combination with the silica, or alumina are magnesia, titania, zirconia, and the like. Other suitable support materials, however, can be employed, for example, finely d ivided functionalised polyolefins such as finely divided polyethylene.

Preferably, the support is a silica having a surface area comprised between 200 and 700 m2/g and a pore volume comprised between 0.5 and 3 ml/g.

The amount of alumoxane and metallocen e or post-metallocene usefully employed in the preparation of the solid support catalyst can vary over a wide range. Preferably, the aluminium to transition metal mole ratio is in the range between 1:1 and 100:1, preferably in the range 5:1 and 50:1.

The order of addition of the metallocenes or post -metallocene and alumoxane to the support material can vary. In accordance with a preferred embodiment of the present invention activator dissolved in a suitable inert hydrocarbon solvent is added to the support material slurried in the same or other suitable hydrocarbon liquid and thereafter a mixture of the metallocene catalyst component is added to the slurry.

Preferred solvents include mineral oils and the various hydrocarbons which are liquid at reaction temperature and which do not react with the individual ingredients. Illustrative examples of the useful solvents include the alkanes such as pentane, iso-pentane, hexane, heptane, octane and nonane; cycloalkanes such as cyclopentane and cyclohexane; and a romatics such as benzene, toluene, ethylbenzene and diethylbenzene.

Preferably the support material is slurried in toluene and the metallocene or post-metallocene and alumoxane are dissolved in toluene prior to addition to the support material.

In one arrangement according to the present invention, each polyolefin is produced individually in a continuously stirred reactor and then mixed together by extrusion. Alternatively, the polyolefins may be mixed together by melt blending. In this way, the low molecular weight and high molecular weight parts of the polyolefin can be produced in separate reactors.

In a preferred arrangement, the product of step (i), including the olefin monomer, is contacted with the second co -reactant and the catalyst system in step (ii) to produce and mix the second polyolefin with the first polyolefin in the second reaction zone. The first and second reaction zones are conveniently interconnected continuously stirred reactors. It is also possible to introduce into the second reaction zone fresh olefin monomer as well as the product of step (i).

Because the second polyolefin is produced in the presence of the first polyolefin, a multimodal or at least bimodal molecular weight distribution is obtained.

Suitable comonomers include alkane and alkene groups, particularly those having 1 to 8 carbon atoms. Typical comonomers include hexene, butene, octane or methylpentene, preferably hexene or butene. It is preferred that the comonomer has a different boiling point to the polymerisat ion solvent in order to facilitate separation.

In one embodiment of the invention, the first co -reactant is hydrogen and the second co-reactant is the comonomer preferably hexene or butene.

Preferably, hydrogen is supplied to the first reaction zone at a rate such that substantially all the hydrogen is consumed in the first reaction zone before step (ii). This is a convenient way of producing a polyolefin, preferably polyethylene, having a bimodal molecular weight distribution whereby relatively low molecular weight homopolymer is produced in the first reaction zone and higher molecular weight copolymer is produced in the second reaction zone. Because substantially all of the hydrogen is consumed in the first reaction zone there is little or no interference with the copolymerisation in the second reaction zone.

In an alternative embodiment, the first co-reactant is the comonomer, preferably hexene or butene. Because the catalyst components of the present invention exhibit good comonomer response as well as good hydrogen response, substantially all of the comonomer is consumed in the first reaction zone in this embodiment. Homopolymerisation takes place in the second reaction zone with little or not interference from the comonomer.

The reactor conditions of the two continuously stirred reactors may be varied independently.

The temperature of each reactor may be in the range of from 60°C to 90°C, preferably from 65°C to 85°C, more preferably from 75°C to 85°C.

The pressure of each reactor preferably may be in the range of from 5 to 10 bar.

Residence time in each reactor may be in the range of from 45 minutes to 9 hours, more typically from 45 minutes to 4 hours.

Preferably the olefin monomer in the present process comprises ethylene. In this regard, preferably the produced polyolefin comprises polyethylene.

In the case of polyethylene, several choices of specific processing technology are available to the skilled person for Ziegler-Natta catalyst systems in continuously stirred tank reactors (CSTR).

Several of the process technologies are summarised in Chemical Market Resources Inc., June/July 2002, Vol. 7, No. 6, pages 18 to 27.

The "Hostalen" process is summarised in this document. It is stated that a mixture of monomer, comonomer, hydrogen an d hexane (diluent) is continuously fed to the reactors operating at temperatures ranging from 75 to 85°C and pressures of 5 to 10 bar. The reactor conditions in each reactor may be varied independently. The polymer suspension flows from the reactors into a common post reactor. The suspension is centrifugally separated, the polymer dried, then it is sent to an extruder for pellitisation. The CSTR reactors may be operated in series.

This document also describes the "CX process", which comprises two continuous stirred-tank reactors of identical size that are operated in series to produce film resins with bimodal molecular weight distribution. The diluent is hexane and the usual comonomer is butene-1. Typical conditions are an operating pressure of 7.8 bar, an operating temperature of 85°C, and a 45 minute residence time per reactor.

A further specific process that is not described in the Chemical Market Resources Inc. document is the "Hoechst" process. This process can be used to produce high density products with an MFI range of 1.0 to 52.0 and a density range of 0.944 to 0.957; and high molecular weight products with an MFI range of 0.24 to 0.55 and a density range of 0.946 to 0.956.

In this process, catalyst may be prepared batchwise and is transferred to catalyst storage vessels, which feed the polymerisation reactors.

A gas feed mixture consisting of ethylene, comonomer and hydrogen may be continuously fed to a first stage reactor. Hexane solvent may be simultaneously pumped to the reactor. Hexane may be recovered downstream from the powder product and recycled back to the reactors. Also, make-up hexane may be added to replace losses.

In the "Hoechst" process, the polymerisation occurs at a pressure of 5 to 10 bar and a temperature of 75 to 90°C. The reaction may be highly exothermic and heat of reaction may be removed via a cooling jacket. Control of the molecular weight distribution may be accomplished through catalyst concentration and by variation of comonomer and hydrogen concentrati on.

The polymer suspension may be placed in an expansion vessel to remove residual quantities of ethylene and comonomer by degasification. Hexane, removed as waste gas, may be condensed and separated for recycling. The polymer slurry may be fed to a centrifuge where the polyethylene powder may be separated from the hexane mother liquor which may be recycled to the first - stage reactors. Recycled hexane may be sent to the reactors directly, without purification. The polyethylene powder may be fed to a dryer where residual hexane is stripped with hot nitrogen.

Up to 2% butene-1 comonomer may be incorporated by the "Hoechst" process.

The invention will now be described in further detail, by way of example only, with reference to the following Examples.

### Example 1

### Catalyst Preparation

Ethylene bis(4,5,6,7-tetrahydro-1-indenyl) zirconium dichloride was prepared in accordance with the method of Brintzinger as published in Journal of Organometallic Chemistry, 288 (1985) pages 63 to 67.

The support used is a silica having a total pore volume of 4.217 ml/g and a surface area of 322 m²/g. This silica is further prepared by drying in high vacuum on a schlenk line for three hours to remove the physically absorbed water. 5g of this silica is suspended in 50 ml of toluene and placed in a round bottom flask equipped with magnetic stirrer, nitrogen inlet and dropping funnel.

An amount of 0.31 g of the metallocene is reacted with 25 ml of methylalumoxane (MAO 30 wt% in toluene) at a temperature of 25°C for 10 minutes to give a solution mixture of the corresponding metallocenium cation and the anionic methylalumoxane oligomer.

Then the resulting solution comprising the metallocenium cation and the anionic methylalumoxane oligomer is added to the support under a nitrogen atmosphere via the dropping funnel which is replaced immediately after with the reflux condenser. The mixture is heated to 110°C for 90 minutes. Then the reaction mixture is cooled down to room temperature, filtered under nitrogen and washed with toluene.

The catalyst obtained is then washed with pentane and dried under a mild vacuum.

### Example 2

### Bimodal polyethylene production by extrusion blending

The supported metallocene catalyst of Example 1 was used in two separate continuously stirred reactors (CSTR) to produce two polyethylene resins having different molecular weight distributions which were subsequently extrusion blended together to produce a bimodal molecular weight distribution polyethylene. Each reactor was a 351 CSTR reactor.

Gel permeation chromatography of the product produced in accordance with this method shows a molecular weight distribution which is bimodal.

### Example 3

### Bimodal polyethylene production using interconnected continuously stirred reactors

The supported metallocene catalyst of Example 1 was used in the production of a bimodal polyethylene using interconnected continuously stirred (CSTR) reactors in series.

Copolymerisation of ethylene and hexene took place in a first 351 CSTR reactor to form a high molecular weight polye thylene and homopolymerisation of ethylene in the presence of hydrogen took place in a second 351 CSTR to produce a low molecular weight polyethylene. A bimodal polyethylene was produced comprising approximately 60 weight % of a high molecular weight polyethylene from the first CSTR and 40 weight % of the low molecular weight polyethylene from the second CSTR. A polyethylene produce having a bimodal molecular weight distribution was obtained.

### Example 4

### Bimodal polyethylene production using continuously s tirred reactors

In this Example, in contrast to Example 3, the low molecular weight part of the bimodal polyethylene is produced in a first CSTR reactor and the high molecular weight part in a second CSTR stirred reactor. In accordance with this Example, the supported metallocene catalyst of Example 1 was used. In the first reactor, homopolymerisation of ethylene took place in the presence of hydrogen. In the second reactor, copolymerisation of ethylene with hexene took place.

## Claims

1. A process for the preparation of polyolefins having a bi - or multimodal molecular weight distribution comprising the steps of:
(i) contacting olefin monomer and a first co -reactant with a catalyst system in a first continuously stirred reactor under first polymerisation conditions to produce a product comprising a first polyolefin having a first molecular weight distribution; and
(ii) contacting olefin monomer and a second co-reactant with a catalyst system in a second continuously stirred reactor under second polymerisation conditions to produce a product comprising a second polyolefin having a second molecular weight distribution that is different from the first molecular weight distribution;
wherein the first and second continuously stirred reactors are connected in series, and the first and second polyolefins are mixed together, and wherein one of the co-reactants is hydrogen and the other is a comonomer, and wherein each catalyst system comprises (a) a metallocene or post -metallocene catalyst component; and (b) an activating agent which activates the catalyst component.

2. A process according to claim 1, wherein the product of step (i), including the olefin monomer, is contacted with the second co-reactant and the catalyst system in step (ii) to produce and mix the second polyolefin with the first polyolefin in the second reaction zone.

3. A process according to claim 1, wherein each polyolefin is produced individually in a reactor and mixed together by extrusion.

4. A process according to any one of the preceding claims, wherein the olefin monomer is ethylene.

5. A process according to any one of the preceding claims, wherein the second co-reactant is hydrogen and the comonomer is hexene.

6. A process according to any one of the preceding claims,
wherein the temperature of each reaction zone is in the range of from 60°C to 90°C.

7. A process according to any one of the preceding claims, wherein each catalyst system comprises a catalyst component comprising a bis tetrahydroindenyl compound of the general formula:
(IndH₄)₂R"MQ₂
where each Ind is the same or different and is indenyl or substituted indenyl, R" is a bridge which comprises a C ₁-C₄ alkylene radical, a dialkyl germanium or silicon or siloxane, or an alkyl phosphine or amine radical, which bridge is su bstituted or unsubstituted, M is a Group IV metal or vanadium and each Q independently is a hydrocarbyl having 1 to 20 carbon atoms or halogen.

8. A process according to any one of claims 1 to 6, wherein each catalyst system comprises a catalyst component comprising general formula I:
(L)ₙM(Q)ₚ (I)
where M is selected from the group consisting of Ti, Zr, Sc, V, Cr, a rare earth metal, Fe, Co, Ni or Pd;
each Q independently is a hydrocarbon having 1-20 carbon atoms or is a halogen:
p is the valence of M minus the sum of the coordination numbers of all L;
n is selected from 1, 2, or 3; and
L is a heteroatom-containing ligand.

9. A process according to claim 8, wherein each catalyst system comprises a catalyst component comprising general formula VII: 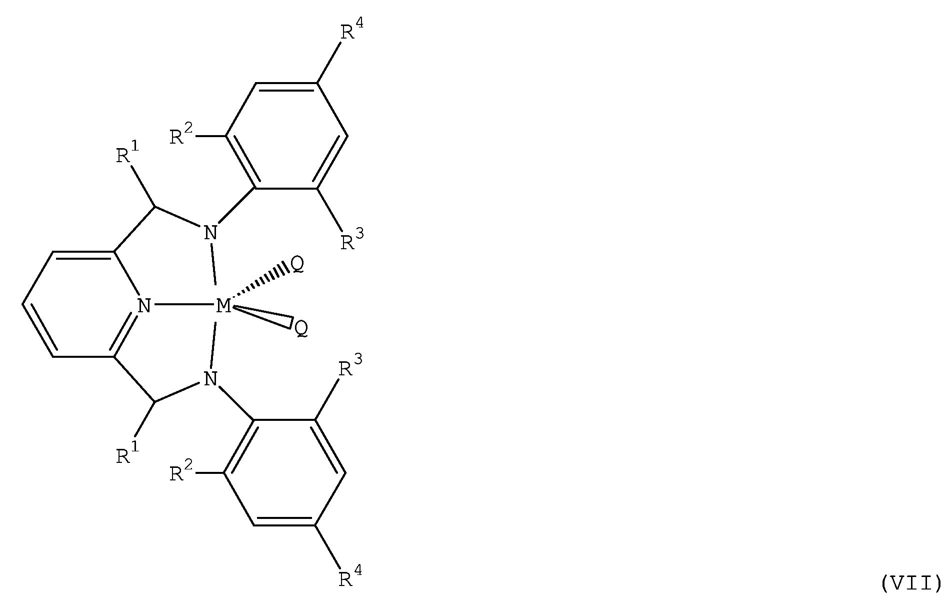 where each Q independently is a hydrocarbon having 1-20 carbon atoms or is a halogen; M is Fe or Co; and R ¹,R²,R³ and R⁴ each independently is hydrogen, hydrocarbyl or substituted hydrocarbyl.

10. A process according to claim 8, wherein each catalyst system comprises a catalyst component comprising general formula VIII: 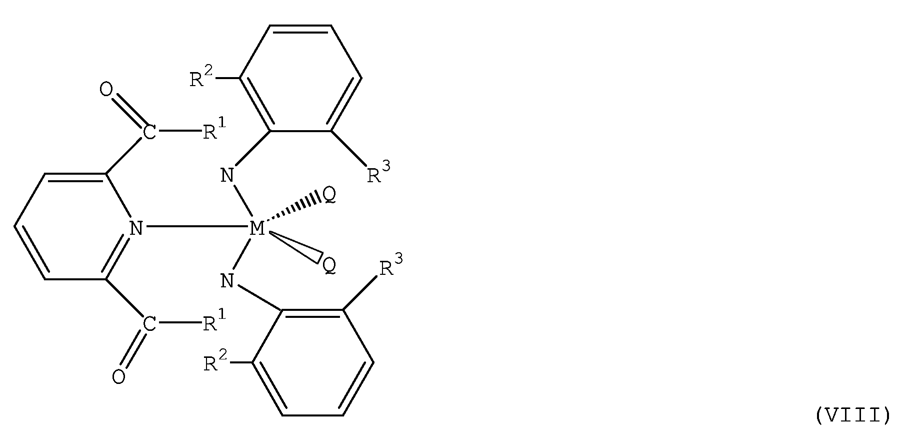 where each Q independently is a hydrocarbon having 1 -20 carbon atoms or is a halogen; Me is Fe or Co; and R¹,R² and R³ each independently is hydrogen, hydrocarbyl or substituted hydrocarbyl.

11. A process according to any one of the preceding claims, wherein the activating agent which activates the catalyst component comprises an aluminium-containing activating agent or a boron-containing activating agent.

12. A process according to any one of the preceding claims, wherein the catalyst system further comprises an inert support.

13. A polyolefin having a bi- or multimodal molecular weight distribution obtained by the process of any one of claims 1 to 12.

14. A polyolefin according to claim 13, wherein the polyolefin is polyethylene.
